# EUROPÄISCHE PATENTSCHRIFT

(11) **EP 2 512 090 B1**
(45) Veröffentlichungstag und Bekanntmachung des Hinweises auf die Patenterteilung: **06.06.2018**
(21) Anmeldenummer: 11003161.4
(22) Anmeldetag: 14.04.2011
(51) Int. Cl.: H04L 29/06, G06F 21/34, G06F 21/43, G06Q 20/00

(54) **VERFAHREN ZUR AUTHENTIFIZIERUNG EINES TEILNEHMERS**
METHOD FOR AUTHENTICATING A SUBSCRIBER
PROCÉDÉ DESTINÉ À L'AUTHENTIFICATION D'UN PARTICIPANT

(43) Veröffentlichungstag der Anmeldung: 17.10.2012
(73) Patentinhaber: Telefónica Germany GmbH & Co. OHG, 80992 München (DE)
(72) Erfinder: Piecha, Sebastian, 81927 München (DE)
(74) Vertreter: Herrmann, Uwe

(56) Entgegenhaltungen:
- EP-A1- 1 785 900
- WO-A1-2008/028215
- GB-A- 2 379 040
- US-A1- 2006 218 391
- US-A1- 2008 109 657
- PIM TUYLS ET AL: "Visual Crypto Displays Enabling Secure Communications", SECURITY IN PERVASIVE COMPUTING; [LECTURE NOTES IN COMPUTER SCIENCE;;LNCS], SPRINGER-VERLAG, BERLIN/HEIDELBERG, Bd. 2802, 27. Januar 2004 (2004-01-27), Seiten 271-284, XP019002204, ISBN: 978-3-540-20887-7

## Beschreibung

Die Erfindung betrifft ein Verfahren zur Authentifizierung eines Teilnehmers in einem Kommunikationsnetz, wobei dem Teilnehmer zur authentifizierenden Eingabe ein verschlüsselter Authentifizierungscode an wenigstens ein Endgerät übermittelt wird.

Im elektronischen Zeitalter werden zahlreiche Dienstleistungen für Teilnehmer angeboten, die eine starke Authentifizierung der teilnehmenden Endverbraucher erfordern. Beispielsweise können tägliche Einkäufe, Bankgeschäfte sowie sonstige Auftragserteilungen und Vertragsabschlüsse über das Internet getätigt werden. Zum Schutz vor etwaigen Manipulationsversuchen durch externe Angreifer werden bedarfsgerechte Authentifizierungsverfahren eingesetzt.

Für eine starke Authentifizierung einzelner Teilnehmer wird ein sicheres Kriterium benötigt. Im Falle von z.B. Einmal-Tokens muss ein zusätzliches Gerät dem jeweiligen Anwender zur Verfügung gestellt werden. Aus Kostengründen werden daher mehr und mehr Authentifizierungsverfahren auf das Mobiltelefon als zusätzlichen Kanal verlagert.

Zur Absicherung einer Transaktion, insbesondere beim Online-Banking über das Internet, werden Authentifizierungsverfahren genutzt, die zwei unterschiedliche Übertragungswege nutzen. Beispielsweise nutzt der Teilnehmer den Internetzugang seines PCs um eine Überweisung bei seiner Bank zu beauftragen. Im Gegenzug wird dem Teilnehmer von seiner Bank über das Mobilfunknetz seines Mobilfunkproviders ein Code per SMS auf sein Mobiltelefon geschickt, wobei die SMS insbesondere der darin enthaltene Code Bezug auf die zuvor eingegebenen Überweisungsdaten nehmen. Zur abschließenden Authentifizierung seiner persönlichen Daten bzw. der Transaktionsdaten gibt der Teilnehmer den empfangenen Code in der entsprechenden Eingabemaske am PC ein, wodurch die Überweisung freigegeben wird.

Ähnlich funktionieren VPN-Zugänge mit SMS-Tokens. Der Mitarbeiter einer Firma stellt mit Hilfe der auf seinem PC installierten Client-Software über ein unsicheres Netz, wie z. B. das WLAN-Netz im Hotel oder an einem öffentlichen Ort, eine Verbindung zum VPN-Gateway seiner Firma her. Die entsprechende IT-Struktur des Firmen-VPN-Netzes übermittelt einen Einmal-Token per SMS auf das Mobilfunkgerät des Firmenmitarbeiters. Erst nach erfolgreicher Eingabe des Tokens in der Client-Software wird eine gesicherte Verbindung ins Firmennetz aufgebaut.

Die beschriebenen starken Authentifizierungsverfahren haben zwar den Vorteil, dass keine vertraulichen Passwörter über das unsichere Netz, d. h. die Internetverbindung bzw. das WLAN-Netz im Hotel, übertragen werden, in der Vergangenheit sind allerdings erfolgreiche Angriffe auf Mobiltelefone durchgeführt worden, die das Mobiltelefon als sicheren, zusätzlichen Kanal in Frage stellen. Gelingt es einem Angreifer auf dem Mobilfunkgerät des Teilnehmers eine Schadsoftware zu installieren, so kann der per SMS empfangene Code verändert und folglich dem Teilnehmer eine falsche Überweisung untergeschoben werden. Das Problem besteht insbesondere auf den immer beliebter werdenden Tablet-PCs, die einerseits das Internetsurfen erlauben, gleichzeitig aber auch für den SMS-Empfang über das Mobilfunknetz gerüstet sind.

Aus der EP 1 785 900 A1 ist ein Verfahren und System zum Übertragen von Daten von einer ersten Datenverarbeitungseinrichtung an eine zweite Datenverarbeitungseinrichtung bekannt. Zur Entschlüsselung ist ein optischer Filter für die Anzeigeeinrichtung der ersten Datenverarbeitungseinrichtung vorgesehen, der ein Entschlüsselungsmuster enthält. Auf Grundlage dieses Entschlüsselungsmusters wird von der zweiten Datenverarbeitungseinrichtung eine Eingabemaske verschlüsselt, welche auf der ersten Anzeigevorrichtung durch Vorhalten des optischen Filters entschlüsselt werden kann.

Die Aufgabe der Erfindung besteht nun darin, die voranstehende Problematik aufzugreifen, um davon ausgehend mit einfachen Mitteln eine sichere Authentifizierung einzelner Teilnehmer zu ermöglichen. Insbesondere soll eine Authentifizierungsmethode aufgezeigt werden, die unabhängig vom ausgewählten Übertragungsmedium ist.

Diese Aufgabe wird durch ein Verfahren mit den Merkmalen des Anspruches 1 gelöst. Demnach wird zur Authentifizierung eines Teilnehmers in einem Kommunikationsnetz der Teilnehmer zur Eingabe eines entsprechenden Authentifizierungscodes aufgerufen. Der entsprechende Authentifizierungscode wird dem Teilnehmer in verschlüsselter Form an wenigstens ein Endgerät übermittelt.

Der Authentifizierungscode umfasst vorzugsweise eine beliebig lange Zeichenkette.

Erfindungsgemäß erfolgt die Entschlüsselung des verschlüsselten Authentifizierungscodes durch Vorhalten einer entsprechenden Folie vor die Endgeräteanzeigeeinheit, die den empfangenen verschlüsselten Authentifizierungscode darstellt. Durch das Vorhalten der Folie erscheint der verschlüsselte Authentifizierungscode in leserlicher Form, so dass die nachfolgende Eingabe des lesbaren Authentifizierungscodes zur Authentifizierung des Teilnehmers im Kommunikationsnetz ermöglicht wird.

Die Dechiffrierung des verschlüsselten Authentifizierungscodes basiert demnach auf keinem mathematischen Modell, das mit Hilfe entsprechender Computersoftware entschlüsselbar oder manipulierbar ist. Das erfindungsgemäße Verfahren erfordert demnach auch kein zusätzliches elektronisches Gerät zur Authentifizierung eines Teilnehmers. Die Verwendung einer Folie ist mit vergleichsweise niedrigen Herstellungs-, Vertriebs- und Betriebskosten verbunden.

Pro Teilnehmer des Kommunikationsnetzes werden vorzugsweise teilnehmerindividuelle Folien verwendet. Dadurch wird gewährleistet, dass ausschließlich der teilnehmende und zur Authentifizierung bestimmte Teilnehmer den übermittelten verschlüsselten Authentifizierungscode dechiffrieren kann. Folglich muss die auf Teilnehmerseite verwendete Folie zur Entschlüsselung bei der Verschlüsselung des Authentifizierungscodes Berücksichtigung finden.

In einer besonders vorteilhaften Ausführung des erfindungsgemäßen Verfahrens umfasst der verschlüsselte Authentifizierungscode ein zufälliges Punkteraster, das durch Vorhalten der Folie vor die Anzeigeeinheit des Endgerätes in einen lesbaren, für die nachfolgende Eingabe zur Authentifizierung des Teilnehmers geeigneten Authentifizierungscode gewandelt wird.

Ein potentieller Angreifer kann auch durch Abgreifen des entsprechenden Punkterasters auf dem Übertragungsweg keine Rückschlüsse auf den für die zur Authentifizierung erforderlichen und lesbaren Authentifizierungscode ziehen, da der Angreifer in der Regel keinen Zugang zur zwingend erforderlichen Folie hat. Eine Entschlüsselung des Punkterasters auf Grundlage elektronischer Geräte ist ausgeschlossen. Ferner ist ein Rückschluß auf die Folieneigenschaften auf Grundlage des empfangenen Punkterasters nahezu unmöglich.

Denkbar ist es, dass die Darstellung des verschlüsselten Authentifizierungscodes und die Eingabe des entschlüsselten Authentifizierungscodes über ein Endgerät erfolgt. Beispielsweise kann beim Online-Banking der Zugang zum Online-Banking-System über einen über das Internet angeschlossenen herkömmlichen PC erfolgen. Aufgrund der erfindungsgemäßen Realisierung des Verfahrens zur Authentifizierung kann die Übertragung an das Gerät und Darstellung des verschlüsselten Authentifizierungscodes auf dem gleichen Gerät erfolgen. Ein zusätzlicher Übertragungskanal für die Übertragung des Authentifizierungscodes ist nicht mehr erforderlich, da ein Angriff auf die Übertragungsstrecke zwischen Online-Banking-System und Endgerät des Teilnehmers ohne Erfolg bleibt. Die Entschlüsselung des Authentifizierungscodes erfolgt durch Vorhalten der Folie vor die Anzeigeeinheit des genutzten Endgerätes.

Alternativ ist eine Aufzweigung auf zwei Endgeräte bzw. Übertragungskanäle denkbar, indem die Darstellung des verschlüsselten Authentifizierungscodes über ein erstes Endgerät und die Eingabe des entschlüsselten Authentifizierungscodes über ein zweites Endgerät erfolgt. Vorzugsweise erfolgt die Übertragung des verschlüsselten Authentifizierungscodes bzw. die Übertragung der Eingabeaufforderung zwischen den Endgeräten und dem Kommunikationsnetz gegebenenfalls über unterschiedliche Kommunikationskanäle. Damit lässt sich das erfindungsgemäße Verfahren ohne weiteres für jegliche Form starker Authentifizierung anwenden.

Im konkreten Anwendungsfall nutzt der Teilnehmer seinen Internetzugang am PC um eine Banktransaktion vorzubereiten und erhält zur Bestätigung der Transaktion den verschlüsselten Authentifizierungscode von der Bank per SMS auf sein Mobiltelefon. Durch Vorhalten der Folie vor das Display des Mobiltelefons wird der empfangene Authentifizierungscode in einen lesbaren Authentifizierungscode gewandelt, der durch Eingabe am PC die entsprechende Überweisung des Teilnehmers freigibt.

Wie oben ausgeführt, ist es grundsätzlich ebenso denkbar, dass der entschlüsselte Authentifizierungscode an demselben Gerät eingegeben wird, an das der verschlüsselte Authentifizierungscode übermittelt wurde. In dem vorgenannten Beispiel kann somit der verschlüsselte Authentifizierungscode von der Bank an den PC übertragen werden, mittels dessen dann auch die Eingabe des entschlüsselten Authentifizierungscodes erfolgt.

Grundsätzlich ist somit von der Erfindung der Fall umfaßt, dass nur eine Übertragungsstrecke zur Übermittlung des verschlüsselten Authentifizierungscodes und zur Eingabe bzw. Übertragung des entschlüsselten Authentifizierungscodes vorgesehen ist, oder dass für beide der genannten Übertragungen unterschiedliche Übertragungsstrecken bzw. -arten verwendet werden.

Im Übrigen ist festzuhalten, dass die oben genannte Übertragung des verschlüsselten Authentifizierungscodes per SMS selbstverständlich nur ein Beispiel darstellt. Von der Erfindung ist auch jede andere geeignete Übertragungsart, wie beispielsweise die Übermittlung des Codes per MMS umfaßt.

Darüber hinaus eignet sich das erfindungsgemäße Verfahren zur Authentifizierung eines Teilnehmers für die VPN-Einwahl und/oder die Anmeldung auf einem Web- und/oder Email-Server. Grundsätzlich lässt sich das erfindungsgemäße Verfahren für sämtliche elektronischen Authentifizierungsverfahren nutzen.

Als Sicherheitsvorkehrung wird erfindungsgemäß wenigstens ein zusätzliches, vom Teilnehmer zu definierendes Symbol an einer festgelegten oder variierenden Stelle des Authentifizierungscodes eingesetzt. Das teilnehmerindividuelle Symbol zeigt das Vorliegen einer gültigen und erfolgreich übertragenen Zeichenkette an und unterstützt folglich die Erkennung von Manipulationsversuchen. Zum Einen ist demnach eine Symbolidentität zwischen dem übertragenen Symbol und einer teilnehmerindividuellen Symboldefinition gefordert, zum anderen wird die Integration des Symbols an der richten Stelle innerhalb der übertragenen Zeichenkette des Authentifizierungscodes verlangt.

Besonders vorteilhaft ist es, wenn der verschlüsselte Authentifizierungscode über einen Mobilfunkkanal auf ein mobiles Endgerät übermittelt wird. Die Übertragung des verschlüsselten Authentifizierungscodes über das Mobilfunksystem erfolgt vorzugsweise per SMS, MMS, WAP-Push-SMS oder einem vergleichbaren Übertragungsverfahren. Das Mobilfunksystem kann vorzugsweise nach einem der bekannten bzw. zukünftigen Mobilfunkstandards ausgeführt sein, insbesondere GSM, GPRS, UMTS, LTE, etc..

Um gegen statistische Angriffe eines Angreifers auf das Authentifizierungsverfahren vorbereitet zu sein, kann eine Deaktvierung des Teilnehmers nach ein- oder mehrmaliger Falscheingabe des entschlüsselten Authentifizierungscodes auf Teilnehmerseite erfolgen. Zweckmäßig ist hierbei die Deaktivierung eines für das Authentifizierungsverfahren angelegten Teilnehmerkontos.

Neben dem erfindungsgemäßen Verfahren betrifft die Erfindung weiterhin die Verwendung einer Folie zur Durchführung des Verfahrens nach einem der voranstehend beschriebenen vorteilhaften Ausführungen. Die Folie ist beispielsweise teiltransparent ausgeführt und besteht entweder aus mehreren Schichten mit unterschiedlicher Lichtdurchlässigkeit oder alternativ aus einem vergossenen Glasfasergewebe. Die entsprechende Folienausführung erlaubt es, ein empfangenes Punkteraster durch Vorhalten der Folie in einen lesbaren Klartext zu verwandeln.

Die Herstellung, Vertrieb und Betrieb einer derartigen Folie ist vergleichsweise kostengünstig und unkompliziert. Im Gegensatz zu herkömmlichen Verfahren ist kein zusätzliches Gerät, insbesondere elektrisches Gerät, zur Entschlüsselung des übertragenen und verschlüsselten Authentifizierungscodes notwendig. Derartige Folien sind vorwiegend manipulationssicher, da aufgrund ihrer technischen Eigenart eine Duplizierung bzw. einfache Kopie nahezu ausgeschlossen ist. Die Größe der Folie bzw. des teiltransparenten Entschlüsselungsfensters bestimmt die Variationsmöglichkeit des Punkterasters. Je größer die Abmessung der Folie bzw. des Entschlüsselungsfensters, desto größer ist die Variationsmöglichkeit zur Ausgestaltung des Punkterasters. Unter Umständen sind unendlich viele unterschiedliche Varianten möglich.

Der zusätzliche Aufwand, der für eine Dechiffrierung des empfangenen verschlüsselten Authentifizierungscodes durch Vorhalten der Folie notwendig ist, ist in Relation zum erhaltenen zusätzlichen Sicherheitsgewinn ohne Weiteres vertretbar. Die zusätzlichen Kosten für die Herstellung und Ausgabe der Folie an die entsprechenden Teilnehmer eines Kommunikationsnetzes ist im Vergleich zu den potentiellen Risiken bei herkömmlichen Verfahren besonders gering.

Vorteilhafterweise ist die Folie in eine Kreditkarte oder in eine Debitkarte, die beispielsweise als EC-Karte ausgeführt sein kann, oder in eine sonstige Identifikations- oder Legitimationskarte, einen Personalausweis, einen Führerschein oder einen Firmenausweis integriert und kann daher auf einfache Art und Weise auf Teilnehmerseite stets mitgeführt werden. Generell ist die Integration der Folie in ähnliche und geeignete personalisierte Gegenstände, wie beispielsweise beliebige Karten denkbar.

Selbstverständlich kann die Folie auch als separater Gegenstand, vorzugsweise in Form einer Karte, ausgeführt und besonders einfach und komfortabel als Schlüsselanhänger mitführbar sein.

Die vorliegende Erfindung betrifft des Weiteren die Verwendung eines vorzugsweise personalisierten Gegenstandes, insbesondere einer Kreditkarte, Debitkarte, Legitimationskarte, Identifikationskarte, Personalausweis, Führerschein, Firmenausweis, zur Durchführung des erfindungsgemäßen Verfahrens, wobei dieser Gegenstand mit wenigstens einer Folie ausgeführt ist, die geeignet ist, einen Code zu entschlüsseln. Die Folie ist vorzugsweise lichtdurchlässig ausgeführt. Die Folie kann gemäß dem kennzeichnenden Teil eines der Ansprüche 9 bis 11 ausgebildet sein.

Des Weiteren ist die Erfindung auf ein Kommunikationsnetz, insbesondere Telekommunikations- bzw. Mobilfunknetz, gerichtet, wobei das Kommunikationsnetz einen oder mehrere Teilnehmerendgeräte sowie Mittel zur Durchführung des Verfahrens nach einer der voranstehenden vorteilhaften Ausführungen umfasst. Die Vorteile und Eigenschaften des erfindungsgemäßen Kommunikationsnetzes entsprechen offensichtlich denen des voranstehend beschriebenen erfindungsgemäßen Verfahrens, weshalb an dieser Stelle auf eine erneute Beschreibung verzichtet wird.

In einer vorteilhaften Ausführung des Kommunikationsnetzes weist dieses Zuordnungsmittel auf, die eine Zuordnung jeder einzelnen personenspezifischen Folie zu einem oder mehreren individuellen Teilnehmern des Kommunikationsnetzes erlaubt. Das Zuordnungsmittel umfasst vorzugsweise eine Datenbank, die zur Speicherung derartiger Zuordnungsdaten ausgelegt ist.

Weiterhin ist es zweckmäßig, dass das Kommunikationsnetz ein Generatormittel umfasst, das ein oder mehrere Authentifizierungscodes unter Berücksichtigung der hinterlegten Daten des Zuordnungsmittels verschlüsselt und gegebenenfalls an den entsprechenden Teilnehmer übermittelt.

Hilfsweise sei darauf hingewiesen, dass der entsprechende Dienst, der eine starke Authentifizierung erforderlich macht, nicht zwangsläufig durch das Kommunikationsnetz selbst angeboten ist. Denkbar ist es beispielsweise, dass das Kommunikationsnetz, insbesondere im Falle eines Mobilfunkproviders, das entsprechende Authentifizierungsverfahren für einen externen Dienstanbieter anbietet. Der Mobilfunkprovider erhält in diesem Fall die entsprechenden Authentifizierungscodes in Klartext, die zur Übertragung an den entsprechenden Teilnehmer des Dienstes vorgesehen sind. Im Zuordnungsmittel wird der entsprechende Folientyp für den zu authentifizierenden Teilnehmer bestimmt und an das Generatormittel übertragen. Das Generatormittel verschlüsselt den von dem externen Dienstleister erhaltenen Authentifizierungscode auf Grundlage der spezifischen Foliendaten des Zuordnungsmittels und überträgt die verschlüsselten Informationen an den Teilnehmer.

Weitere Vorteile und Einzelheiten der Erfindung werden im Folgenden anhand eines Ausführungsbeispiels näher erläutert. Es zeigen:
- Fig. 1:: ein mögliches Angriffsszenario auf ein herkömmliches Verfahren zur Authentifizierung eines Teilnehmers am Beispiel eines Online-Banking-Dienstes,
- Fig. 2:: das erfindungsgemäße Verfahren zur Authentifizierung eines Teilnehmers am Beispiel eines Online-Banking-Dienstes,
- Fig. 3:: ein mögliches Ausführungsbeispiel der erfindungsgemäßen Folie, und
- Fig. 4:: eine Kreditkarte oder Debitkarte mit einer integrierten erfindungsgemäßen Folie.

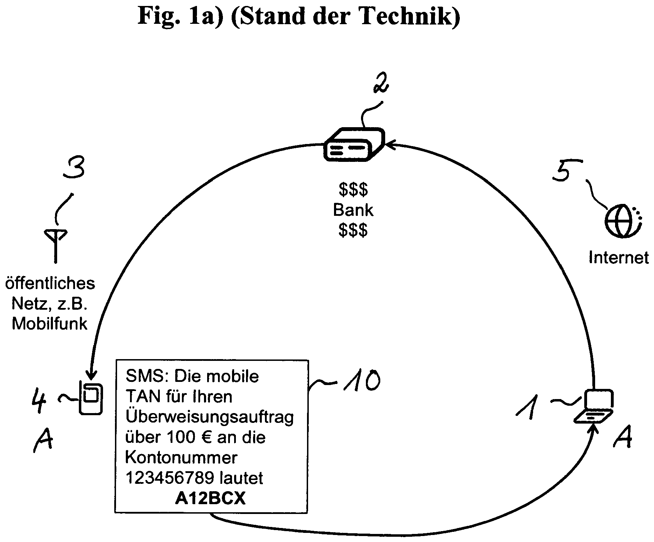

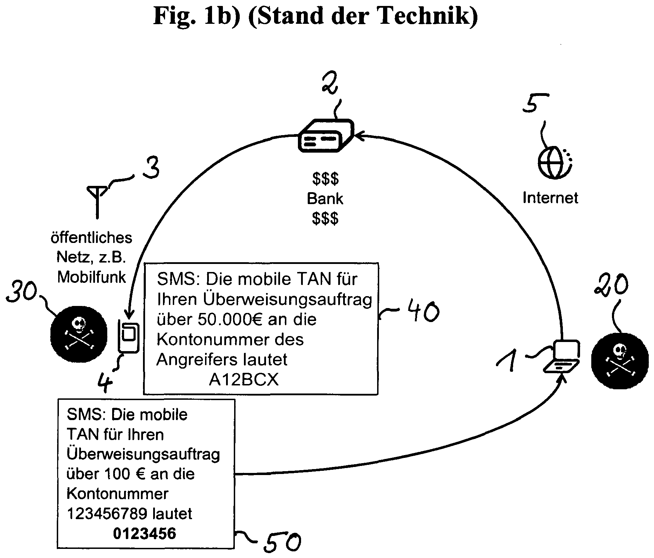

Figur 1 zeigt ein mögliches Angriffsszenario auf ein starkes Authentifizierungsverfahren nach dem Stand der Technik am konkreten Beispiel der mobilen TAN beim Online-Banking. Der Teilnehmer A verbindet sich über den Internetanschluß des PCs 1 mit dem Bankserver 2 seiner Bank. Typischerweise bieten bekannte Banken als Onlinedienst einen Web-Zugang für den Endverbraucher zur Tätigung bestimmter Bankgeschäfte per Online-Banking-Verfahren an.

Zur Absicherung einer Transaktion des Teilnehmers A nutzt der Bankserver 2 ein sogenanntes starkes Authentifizierungsverfahren, das für die vollständige Ausführung beliebiger Transaktionen stets zwei unterschiedliche Übertragungswege nutzt. In dem gezeigten Beispiel der Fig. 1a stellt der erste Übertragungsweg den Anschluß des PCs 1 des Teilnehmers A über das Internet 5 an den Bankserver 2 dar. Über diesen Internetzugang 5 bereitet der Teilnehmer A am PC 1 eine Überweisung über das Webinterface des Bankservers 2 vor. Im Gegenzug übermittelt der Bankserver 2 über das Mobilfunknetz 3 des Mobilfunkanbieters von Teilnehmer A einen Authentifizierungscode per SMS auf das Endgerät 4 des Teilnehmers 4.

Der Text der empfangenen SMS 10 ist in der entsprechenden Textbox der Figur 1a wiedergegeben. Die SMS 10 weist den Teilnehmer A darauf hin, dass für den über den PC 1 erteilten Überweisungsauftrag über 100,00 Euro an die Kontonummer 123456789 ein Authentifizierungscode A12BCX, im Folgenden schlichtweg als mobile TAN bezeichnet, zur Verfügung steht. Die genannte mobile TAN wird über den Mobilfunkkanal 3 des Mobilfunkanbieters per SMS 10 in Klartext an das mobile Endgerät 4 des Teilnehmers A übertragen. Durch Eingabe der TAN am PC 1 des Teilnehmers A kann die Überweisung endgültig freigegeben werden.

Figur 1b zeigt ein mögliches Angriffsszenario eines externen Angreifers auf die getätigte Transaktion des Teilnehmers A. Auf dem PC 1 des Teilnehmers A wurde unbemerkt ein Trojaner 20 installiert, der den über das Web-Interface des Bankservers 2 ausgeführten Transaktionsauftrag ohne Kenntnis des Teilnehmers A manipuliert und verfälscht an den Bankserver 2 übermittelt. Beispielsweise tätigt der Teilnehmer A am PC 1 die Eingaben für einen Überweisungsauftrag in Höhe von 100,00 Euro an die Kontonummer 123456789. Der Trojaner verfälscht die getätigten Auftragsdaten im Hintergrund und übermittelt an den Bankserver 2 einen manipulierten Auftrag, der eine Überweisung von 50.000,00 Euro an die Kontonummer des Angreifers beinhaltet.

Zur Authentifizierung des Teilnehmers A initiiert der Bankserver 2 die Versendung einer SMS 40 mit der mobilen TAN über das Mobilfunknetz 3 an das Endgerät 4, wobei die SMS 40 bzw. die mobilen TAN-Daten allerdings den verfälschten Auftrag über 50.000,00 Euro betreffen.

Damit beim Teilnehmer A kein Verdacht über die Manipulation der Banktransaktion geweckt wird, muss zusätzlich ein Trojaner 30 auf dem Endgerät 4 des Teilnehmers A installiert sein, der die empfangene SMS 40 des Bankservers 2 unterdrückt und stattdessen eine Anzeige einer gefälschten SMS 50 bewirkt, die dem ursprünglichen durch den Teilnehmer A erteilten Auftrag entspricht.

Die beiden Trojaner 20, 30 auf den jeweiligen Endgeräten 1, 4 kooperieren dabei derart miteinander, so dass die erfolgte Eingabe der gefälschten und für den Teilnehmer A auf dem Endgerät 4 ersichtlichen TAN 0123456 an dem PC 1 durch die korrekte, aber dem Teilnehmer A nicht bekannte TAN A12BCX ersetzt wird. Folglich nimmt der Teilnehmer A an, dass seine Transaktion über 100,00 Euro auf die Kontonummer 123456789 freigegeben wurde, wohingegen im Hintergrund tatsächlich eine Überweisung auf das Konto des Angreifers mit einem Betrag über 50.000,00 Euro durch den Teilnehmer A legitimiert wurde.

Die Ausführung des erläuterten Angriffsverfahrens wird insbesondere beim Einsatz von sogenannten Tablet-PCs bzw. Smartphones erheblich vereinfacht, da derartige Geräte gleichermaßen für den Internetzugang als auch für den SMS-Empfang ausgelegt sind. Da die beiden Geräte 1, 4 in diesem Fall auf ein einziges Gerät zusammenfallen, ist die Installation eines Trojanerprogramms auf dem genutzten Endgerät ausreichend, wobei dieser Trojaner sodann beide Funktionen der in Figur 1 dargestellten Trojaner 20, 30 übernimmt.

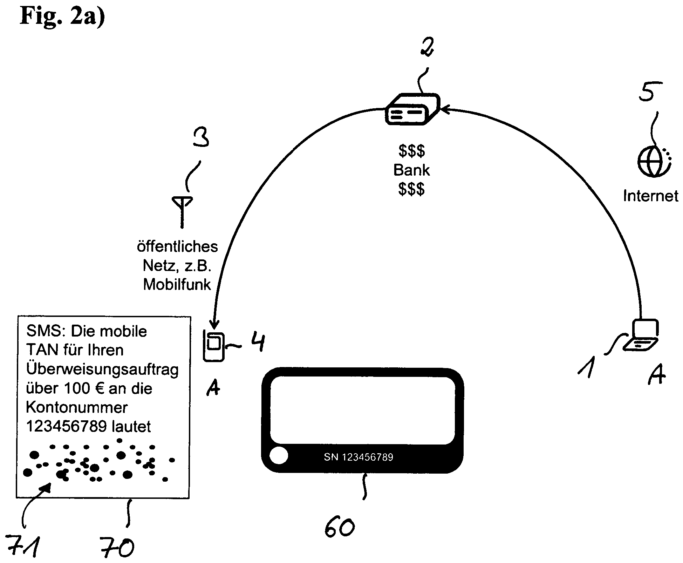

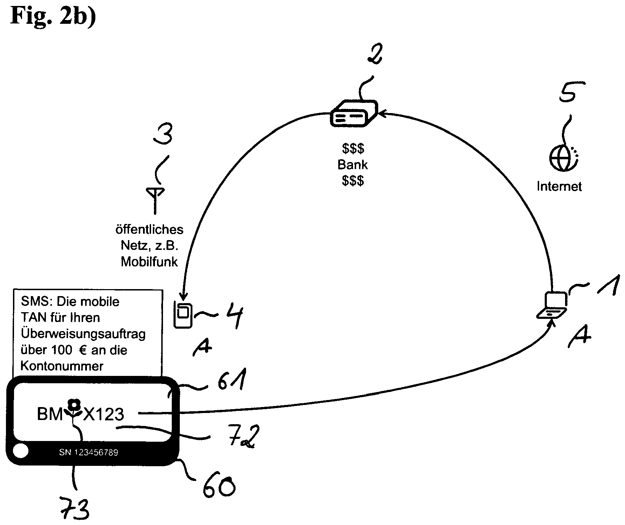

Figur 2a zeigt das erfindungsgemäße Verfahren zur Authentifizierung eines Teilnehmers A bei der Nutzung eines Online-Banking-Dienstes. Die grundlegende Vorgehensweise stimmt im weitesten Sinne mit dem Verfahren der Figur 1 überein. Identische Merkmale bzw. Gegenstände werden demnach in den Figuren 1, 2 mit gleichen Bezugszeichen gekennzeichnet.

Der Teilnehmer beauftragt die Bank über den Interanschluß des PCs 1 zur Ausführung einer Überweisung über 100 Euro auf die Kontonummer 123456789. Die notwendigen Eingaben nimmt der Teilnehmer dazu über das Webinterface des Bankservers 2 vor.

Im Gegensatz zum bekannten Authentifizierungsverfahren der Figur 1 übermittelt der Bankserver 2 jedoch den entsprechenden Authentifizierungscode/TAN nicht in Klartext mit einer SMS an des Endgerät 4 des Teilnehmers A. Vielmehr initiiert der Bankserver den SMS-Versand über das Mobilfunknetz 3 auf das Endgerät 4, wobei die übertragene SMS 70 ein Punkteraster 71 beinhaltet, das eine verschlüsselte Form des erforderlichen Authentifizierungscodes bzw. der mobilen TAN darstellt. Ein Angreifer könnte zwar die übertragene SMS 70 an einer beliebigen Stelle des Systems abgreifen, jedoch kann er die notwendigen Informationen zur Bestätigung eines manipulierten Überweisungsauftrages nicht ableiten bzw. auslesen.

Die Übertragung per SMS stellt nur ein Beispiel dar. Von der Erfindung ist grundsätzlich auch andere Formen der Übermittlung des Authentifizierungscodes denkbar. In Betracht kommt beispielsweise die Übertragung per MMS, WAP-Push-SMS etc.

Zur Entschlüsselung des Punktrasters 71 besitzt der Teilnehmer A die teiltransparente Folie 60, die für jeden Teilnehmer des Authentifizierungsverfahrens individuell gestaltet ist. Durch Vorhalten bzw. Auflegen der Folie auf die Anzeigeeinheit des Endgerätes 4 wird das Punkteraster 71, wie in Figur 2b gezeigt, in den leserlichen Authentifizierungscode 72 gewandelt.

Die vom Bankserver 2 für die jeweilige Transaktion bereitgestellte und noch unverschlüsselte TAN wird Zusammen mit den den Teilnehmer A kennzeichnenden Daten, beispielsweise die Rufnummer des Teilnehmers A, an ein Zuordnungsmittel des Mobilfunknetzes 3 weitergereicht. Das Zuordnungsmittel umfasst eine Datenbank, die den einzelnen Teilnehmern des Mobilfunknetzes 3 entsprechende Daten zuordnet, die die Eigenart und Ausführung ihrer teilnehmerindividuellen Folie betreffen. Die zum Teilnehmer A zugeordneten Daten werden einem Generatormittel zur Verfügung gestellt, dass auf der Grundlage der erhaltenen Daten die TAN verschlüsselt und das teilnehmerspezifische Punkteraster 71 generiert. Ferner wird durch das Generatormittel der entsprechende SMS-Versand der SMS 71 vorbereitet und ausgeführt.

Das vorliegende Ausführungsbeispiel bezieht sich auf eine Transaktion mit einer Bank. An dieser Stelle wird darauf hingewiesen, dass die vorliegende Erfindung selbstverständlich nicht nur auf Banktransaktionen beschränkt ist, sondern auch andere Dienste betreffen kann, wie beispielsweise Verkaufsvorgänge. So ist es mit der vorliegenden Erfindung beispielsweise auch möglich einen Kauf im Internet zu tätigen, wobei in diesem Fall nicht eine Bank Partner der Transaktion ist, sondern ein beliebiges Unternehmen, das im Internet Waren oder Dienstleitungen anbietet.

Denkbar ist es, dass die Folie bzw. deren Träger, wie z.B. eine Karte oder dergleichen so ausgebildet ist, dass unterschiedliche Dienste, wie z.B. Banktransaktionen, Kaufvorgänge etc. mit einer Folie durchgeführt werden können.

Um die Sicherheit des erfindungsgemäßen Verfahrens weiter zu erhöhen und potentielle Manipulationsversuche zuverlässig zu erkennen, wird stets ein beliebig definierbares Symbol in die Zeichenkette des TANs/Authentifizierungscodes integriert. Im dargestellten Beispiel der Figur 2 ist hinter dem zweiten Zeichen des TANs 72 ein Blumensymbol 73 integriert, das vorab durch den Teilnehmer A festgelegt wurde. Weiterhin ist dem Teilnehmer A die vorab bestimmte Position des Symbols 71 innerhalb der Zeichenkette 72 bekannt. Beispielsweise könnten Symbolart und Symbolposition für jede folgende Transaktion variieren oder erneut festgelegt werden.

Ferner kann durch wiederholte Falscheingabe der TAN am PC 1 das Authentifizierungsverfahren für den Teilnehmer A gesperrt werden, um mögliche statistische Angriffe auszuschließen.

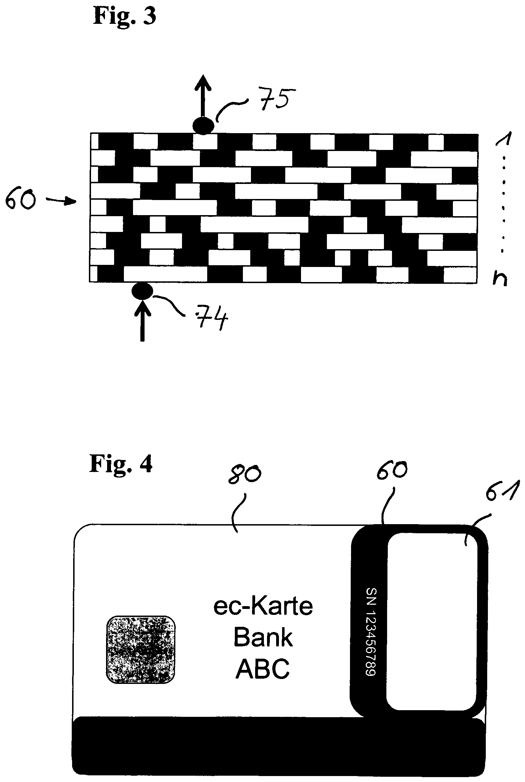

Figur 3 zeigt den Aufbau der erfindungsgemäßen Folie anhand einer Querschnittsdarstellung. Die Entschlüsselungsfunktion der Folie 60 wird durch eine Vielzahl n von aufeinanderliegender und unterschiedlich lichtdurchlässiger Schichten 1...n bestimmt. Die weißen und schwarzen Flächen der einzelnen Schichten n kennzeichnen die punktuelle Lichtdurchlässigkeit jeder Schicht, wobei eine weiße Fläche eine vergleichsweise hohe Lichtdurchlässigkeit charakterisiert und eine schwarze Fläche einen nahezu lichtundurchlässigen Bereich kennzeichnet. Beispielsweise ist ein Bildpunkt 74 des Punkterasters 71 an der Folienunterseite eingezeichnet. Die von dem Bildpunkt 74 emittierten Lichtstrahlen werden durch die Schichtanordnung 1...n der Folie 60 umgeleitet und verschieben folglich die Bildwahrnehmung des Punktes 74 auf den Punkt 75. Das Punkteraster 71 der Figur 2a kann folglich durch Auflegen der Folie 70 auf die Darstellung des Rasters 71 in die leserliche Zeichenkette 72 gewandelt werden.

Die Anzahl n der Schichten pro Folie 60 sowie deren individuelle Ausgestaltung definiert die teilnehmerindividuellen Eigenschaften jeder Folie 60. Ferner ist die räumliche Dimensionierung der Schichten sowie der Folie 60 als Ganzes für die Anzahl der Variationsmöglichkeiten des Punkterasters 71 bestimmend.

Figur 4 zeigt ein mögliches Ausführungsbeispiel der Folie 60. In der gezeigten Darstellung ist die Folie 60 in eine bekannte Debitkarte, die als EC-Karte 80 ausgeführt ist, integriert. Die gesamte Folie 60 umfasst dabei ein Entschlüsselungsfenster 61, das die erläuterte Struktur aus Figur 3 umfasst. Die Integration der Folie 60 in eine Debitkarte bzw. EC-Karte macht ein tägliches Mitführen der Folie für den Teilnehmer A besonders komfortabel. Zur Entschlüsselung wird die Debitkarte 80 auf dem Display des Mobiltelefons 4 plaziert, wobei das Entschlüsselungsfenster 61 einen gesondert gekennzeichneten Displaybereich des Gerätes präzise abdeckt, um eine fehlerfreie Umwandlung des Punkterasters 71 in den Klartext 72 zu ermöglichen.

Eine weitere vorteilhafte Anwendungsmöglichkeit der erfindungsgemäßen Folie besteht darin, die eine Kreditkarte, Debitkarte oder eine sonstige Karte, wie beispielsweise eine Legitimationskarte oder Identifikationskarte mit einer Folie zu versehen. Dadurch ist es möglich, die betreffende Karte auf ihre Gültigkeit bzw. Echtheit zu prüfen. Denkbar ist es beispielsweise, dass die Karte wenigstens einen ersten Code aufweist, mit dem die Karte bzw. deren Nutzer identifizierbar ist. Als Beispiel kommt ein Magnetstreifen oder ein Chip in Betracht. Durch die Folie kann nun die Richtigkeit dieses Codes überprüft werden und zwar beispielsweise dahingehend, dass ermittelt wird, dass die durch die Folie entschlüsselte Information die Richtigkeit des genannten Codes bestätigt bzw. diesem Code entspricht.

In einem konkreten Ausführungsbeispiel ist es denkbar, dass der Nutzer eine Debitkarte, die beispielweise als EC-Karte ausgeführt sein kann, in einen Bankautomaten einführt, um Geld abzuheben. Dabei wird zum einen die auf dem Magnetstreifen oder einem sonstigen Mittel, wie beispielsweise einem Chip gespeicherte Information ausgelesen. Des Weiteren ist der Bankautomat derart ausgebildet, dass er ein bestimmtes, z.B. optisches Signal durch die Folie hindurchleitet und überprüft, wie die Folie dieses Signal entschlüsselt hat. Ist die entschlüsselte Information kompatibel mit den sonstigen vorzugsweise personalisierten Identifikationsmerkmalen der Karte, wird die Karte als echt, andernfalls als ungültig bewertet.

Dieses Beispiel ist selbstverständlich nicht auf eine Karte zur Durchführung einer Banktransaktion beschränkt, sondern gilt auch für Karten zur Durchführung anderer Vorgänge, wie Bestellvorgängen oder dergleichen.

## Patentansprüche

1. Verfahren zur Authentifizierung eines Teilnehmers (A) in einem Kommunikationsnetz (3), wobei dem Teilnehmer (A) zur authentifizierenden Eingabe ein verschlüsselter Authentifizierungscode (72) an wenigstens ein Endgerät (4) übermittelt wird, wobei der auf der Anzeigeeinheit des Endgerätes (4) dargestellte verschlüsselte Authentifizierungscode (72) durch Vorhalten einer Folie (60) entschlüsselt wird und der entschlüsselte Authentifizierungscode (72) zur Authentifizierung des Teilnehmers (A) im Kommunikationsnetz (3) eingegeben wird,
**dadurch gekennzeichnet,**
**dass** ein zusätzliches vom Teilnehmer (A) zu definierendes Symbol (73) an jeweils einer festgelegten oder variierenden Stelle des Authentifizierungscodes (72) eingesetzt wird.

2. Verfahren nach Anspruch 1, **dadurch gekennzeichnet, dass** der übermittelte verschlüsselte Authentifizierungscode (72) ein zufälliges Punkteraster (71) umfasst, wobei durch Vorhalten der Folie (60) ein lesbarer Authentifizierungscode (72) sichtbar wird.

3. Verfahren nach Anspruch 1 oder 2, **dadurch gekennzeichnet, dass** eine Verschlüsselung des Authentifizierungscodes (72) vor der Übermittlung unter Berücksichtigung der verwendeten teilnehmerindividuellen Folie (60) des empfangenden Teilnehmers (A) erfolgt.

4. Verfahren nach einem der vorhergehenden Ansprüche, **dadurch gekennzeichnet, dass** die Darstellung des verschlüsselten Authentifizierungscodes (72) und die Eingabe des entschlüsselten Authentifizierungscodes (72) über ein Endgerät erfolgt.

5. Verfahren nach einem der vorhergehenden Ansprüche, **dadurch gekennzeichnet, dass** die Darstellung des verschlüsselten Authentifizierungscodes (72) und die Eingabe des entschlüsselten Authentifizierungscodes (72) über verschiedene Endgeräte (4) erfolgt, wobei die Übertragung des verschlüsselten Authentifizierungscodes (72) bzw. die Übertragung der Eingabeaufforderung zwischen den Endgeräten (4) und dem Kommunikationsnetz (3) gegebenenfalls über unterschiedliche Kommunikationskanäle erfolgt.

6. Verfahren nach einem der vorhergehenden Ansprüche, **dadurch gekennzeichnet, dass** das Verfahren zur Authentifizierung eines Teilnehmers (A) für einen Online-Banking-Dienst und/oder eine VPN-Einwahl und/oder die Anmeldung auf Web- oder Emailservern (2) verwendet wird.

7. Verfahren nach einem der vorhergegangenen Ansprüche, **dadurch gekennzeichnet, dass** der verschlüsselte Authentifizierungscode (72) über einen Mobilfunkkanal auf ein mobiles Endgeräte (4) übermittelt wird, insbesondere per SMS, MMS, WAP-Push-SMS oder dergleichen.

8. Verfahren nach einem der vorhergehenden Ansprüche, **dadurch gekennzeichnet, dass** nach einfacher oder mehrmaliger Falscheingabe des entschlüsselten Authentifizierungscodes (72) eine Teilnehmersperre erfolgt.

9. Verwendung einer Folie (60) zur Durchführung des Verfahrens nach einem der Ansprüche 1 bis 8, **dadurch gekennzeichnet, dass** die Folie (60) aus mehreren Schichten (1 ... n) mit unterschiedlicher Lichtdurchlässigkeit besteht.

10. Verwendung einer Folie (60) zur Durchführung des Verfahrens nach einem der Ansprüche 1 bis 8, **dadurch gekennzeichnet, dass** die Folie (60) aus einem vergossenen Glasfasergewebe besteht.

11. Verwendung der Folie (60) nach einem der Ansprüche 9 oder 10, **dadurch gekennzeichnet, dass** die Folie (60) an einem Schlüsselanhänger mitführbar ist.

12. Verwendung eines personalisierten Gegenstandes, insbesondere Kreditkarte (80), Debitkarte, Legitimationskarte, Identifikationskarte, Personalausweis, Führerschein, Firmenausweis, zur Durchführung des Verfahrens nach einem der Ansprüche 1 bis 8, **dadurch gekennzeichnet, dass** der Gegenstand (80) mit wenigstens einer Folie (60) ausgeführt ist, die geeignet ist, einen Code (72) zu entschlüsseln, wobei die Folie (60) vorzugsweise gemäß dem kennzeichnenden Teil eines der Ansprüche 9 bis 11 ausgebildet ist.

13. Kommunikationsnetz (3), insbesondere Telekommunikationsnetz bzw. Mobilfunknetz, mit einem oder mehreren Teilnehmerendgeräten (3) und mit Mitteln zur Durchführung des Verfahrens nach einem der Ansprüche 1 bis 8.

14. Kommunikationsnetz (3) nach Anspruch 13, wobei das Kommunikationsnetz (3) ein Zuordnungsmittel aufweist, das eine Zuordnung jeder einzelnen personenspezifischen Folie (60) zu einem oder mehreren individuellen Netzteilnehmern erlaubt, und ein Generatormittel umfasst, das ein oder mehrere Authentifizierungscodes (72) unter Berücksichtigung der Daten des Zuordnungsmittel verschlüsselt und gegebenenfalls an den entsprechenden Teilnehmer (A) übermittelt.

## Claims

1. A method of authenticating a subscriber (A) in a communication network (3), wherein an encoded authentication code (72) is transmitted to at least one end device (4) to the subscriber (A) for an authenticati ng input, wherein the encoded authentication code (72) shown on the display unit of the end device (4) is decoded by holding up a film (60) and the decoded authentication code (72) for authenticating the subscriber (A) in the communication network (3) is input,
**characterized in that**
an additional symbol (73) to be defined by the subscriber (A) is used at a respective fixed or varying position of the authentication code (72).

2. A method in accordance with claim 1, **characterized in that** the transmitted encoded authentication code (72) comprises a random dot matrix (71), with a readable authentication code (72) becoming visible by presenting a film (60).

3. A method in accordance with claim 1 or claim 2, **characterized in that** an encoding of the authentication code (72) takes place before the transmission while taking account of the used subscriber-individual film (60) of the receiving subscriber (A).

4. A method in accordance with one of the preceding claims, **characterized in that** the representation of the encoded authentication code (72) and the input of the decoded authentication code (72) take place via an end device.

5. A method in accordance with one of the preceding claims, **characterized in that** the representation of the encoded authentication code (72) and the input of the decoded authentication code (72) take place via different end devices (4), with the transmission of the encoded authentication code (72) or the transmission of the input prompt between the end devices (4) and the communication network (3) optionally taking place via different communication channels.

6. A method in accordance with one of the preceding claims, **characterized in that** the method for authenticating a subscriber (A) is used for an online banking service and/or for a VPN dial-i n and/or for a registration on web or email servers (2).

7. A method in accordance with one of the preceding claims, **characterized in that** the encoded authentication code (72) is transmitted via a cellular radio channel to a mobile end device (4), in particular by SMS, MMS, WAP push SMS, or the like.

8. A method in accordance with one of the preceding claims, **characterized in that** a subscriber block takes place after a single or multiple incorrect entry of the encoded authentication code (72).

9. Use of a film (60) for carrying out the method in accordance with one of the claims 1 to 8, **characterized in that** the film (60) comprises a plurality of layers (1 ... n) having different light permeability.

10. Use of a film (60) for carrying out the method in accordance with one of the claims 1 to 8, **characterized in that** the film (60) comprises a cast fiberglass.

11. Use of a film (60) in accordance with one of the claims 9 or 10, **characterized in that** the film (60) can be carried on a keychain.

12. Use of a personalized article, in particular a credit card (80), a debit card, a legitimation card, an identification card, an ID, a driver's license, a company ID, for carrying out the method in accordance with one of the claims 1 to 8, **characterized in that** the article (80) is designed with at least one film (60) that is suitable to decode a code (72), with the film (60) preferably being formed in accordance with the characterizing portion of one of the claims 9 to 11.

13. A communication network (3), in particular a telecommunications network or a cellular radio network, having one or more subscriber end devices (3) and having means for carrying out the method in accordance with one of the claims 1 to 8.

14. A communication network (3) in accordance with claim 13, wherein the communication network (3) has an association means that permits an association of every single person-specific film (60) with one or more individual network subscribers and comprises a generator means that encodes one or more authentication codes (72) while taking account of the data of the association means and optionally transmits them to the corresponding subscriber (A).

## Revendications

1. Procédé destiné à l'authentification d'un participant (A) dans un réseau de communication (3), un code d'authentification (72) chiffré étant transmis au participant (A) sur au moins un terminal (4) pour la saisie d'authentification,
le code d'authentification (72) chiffré représenté sur l'unité d'affichage du terminal (4) étant déchiffré en mettant une feuille (60) devant celle-ci et le code d'authentification (72) déchiffré étant saisi pour l'authentification du participant (A) dans le réseau de communication (3),
**caractérisé en ce que**
un symbole (73) supplémentaire à définir par le participant (A) est inséré à un emplacement respectivement défini ou variable du code d'authentification (72).

2. Procédé selon la revendication 1, **caractérisé en ce que** le code d'authentification (72) chiffré transmis comprend une trame à points (71) aléatoire, un code d'authentification (72) lisible devenant visible en mettant la feuille (60) devant celle-ci.

3. Procédé selon la revendication 1 ou 2, **caractérisé en ce qu'**un chiffrement du code d'authentification (72) est effectué avant la transmission en tenant compte de la feuille (60) propre au participant utilisée du participant (A) récepteur.

4. Procédé selon l'une des revendications précédentes, **caractérisé en ce que** la représentation du code d'authentification (72) chiffré et la saisie du code d'authentification (72) déchiffré sont effectuées par le biais d'un terminal.

5. Procédé selon l'une des revendications précédentes, **caractérisé en ce que** la représentation du code d'authentification (72) chiffré et la saisie du code d'authentification (72) déchiffré sont effectuées par le biais de différents terminaux (4), la transmission du code d'authentification (72) chiffré ou la transmission de la demande de saisie entre les terminaux (4) et le réseau de communication (3) étant effectuée le cas échéant par le biais de différents canaux de communication.

6. Procédé selon l'une des revendications précédentes, **caractérisé en ce que** le procédé destiné à l'authentification d'un participant (A) est utilisé pour un service de banque en ligne et/ou l'accès à un VPN et/ou la connexion sur des serveurs web ou de messagerie électronique (2).

7. Procédé selon l'une des revendications précédentes, **caractérisé en ce que** le code d'authentification (72) chiffré est transmis sur un terminal mobile (4) par le biais d'un canal de téléphonie mobile, en particulier par SMS, MMS, SMS de type WAP Push ou similaires.

8. Procédé selon l'une des revendications précédentes, **caractérisé en ce qu'**après une ou plusieurs saisies erronées du code d'authentification (72) déchiffré, un blocage du participant se produit.

9. Utilisation d'une feuille (60) pour exécuter un procédé selon l'une des revendications 1 à 8, **caractérisée en ce que** la feuille (60) est constituée de plusieurs couches (1 ... n) dotées d'une transparence différente.

10. Utilisation d'une feuille (60) pour exécuter le procédé selon l'une des revendications 1 à 8, **caractérisée en ce que** la feuille (60) est constituée d'un tissu de fibre de verre coulé.

11. Utilisation de la feuille (60) selon l'une des revendications 9 ou 10, **caractérisée en ce que** la feuille (60) peut être portée sur un porte-clés.

12. Utilisation d'un objet personnalisé, en particulier une carte de crédit (80), une carte de débit, une carte d'ayant droit, une carte d'identification, une carte d'identité, un permis de conduire, un badge d'entreprise, pour exécuter le procédé selon l'une des revendications 1 à 8, **caractérisée** en ceque l'objet (80) est réalisé avec au moins une feuille (60), qui est adaptée pour déchiffrer un code (72), la feuille (60) étant réalisée de préférence selon la partie caractérisante de l'une des revendications 9 à 11.

13. Réseau de communication (3), en particulier réseau de télécommunication ou réseau de téléphonie mobile, comprenant un ou plusieurs terminaux de participant (3) et des moyens destinés à exécuter le procédé selon l'une des revendications 1 à 8.

14. Réseau de communication (3) selon la revendication 13, dans lequel le réseau de communication (3) comporte un moyen d'affectation, qui permet une affectation de chaque feuille (60) individuelle spécifique à une personne à un ou plusieurs participants individuels du réseau, et comprend un moyen générateur qui chiffre un ou plusieurs codes d'authentification (72) en tenant compte des données du moyen d'affectation et le ou les transmet le cas échéant au participant (A) correspondant.
